# EUROPÄISCHE PATENTANMELDUNG

(11) **EP 0 892 176 A1**
(43) Veröffentlichungstag der Anmeldung: **20.01.1999**
(21) Anmeldenummer: 98113200.4
(22) Anmeldetag: 15.07.1998
(51) Int. Cl.: F15B 21/04

(54) **Tankanordnung**

(30) Priorität: 16.07.1997 DE 29712578 U
(71) Anmelder: STILL GMBH, D-22113 Hamburg (DE)
(72) Erfinder: Neumann, Udo, 22946 Brunsbek (DE)
(74) Vertreter: Kasseckert, Rainer

(57) **Zusammenfassung**

Gegenstand der Erfindung ist eine Tankanordnung, insbesondere für eine Hydraulikanlage, mit einem eine Be- und Entlüftungsöffnung aufweisenden Tank, wobei im Bereich der Be- und Entlüftungsöffnung ein Filter (3) lösbar befestigt ist. Erfindungsgemäß ist der Filter (3) mittels eines zumindest teilweise aus elastischem Material bestehenden Befestigungsstücks (2) im Bereich der Be- und Entlüftungsöffnung an dem Tank befestigbar. Das Befestigungsstück (2) ist vorteilhafterweise rotationssymmetrisch ausgeführt und ist in die Be- und Entlüftungsöffnung einsteckbar.

## Beschreibung

Die Erfindung betrifft eine Tankanordnung, insbesondere für eine Hydraulikanlage, mit einem eine Be- und Entlüftungsöffnung aufweisenden Tank, wobei im Bereich der Be- und Entlüftungsöffnung ein Filter lösbar befestigt ist.

Tankanordnungen dieser Art werden häufig in Arbeitsmaschinen, wie z.B. Flurförderzeugen, als Teil einer Hydraulikanlage eingesetzt. Während des Betriebs der Arbeitsmaschine, oder bei der Durchführung von Wartungsarbeiten, ändert sich die Menge einer in dem Tank befindlichen Flüssigkeit, beispielsweise Hydrauliköl, fortlaufend. Der Tank weist aus diesem Grund eine Be- und Entlüftungsöffnung auf, durch welche jederzeit Luft aus dem Tank entweichen, oder aus der Umgebung in den Tank einströmen kann.

Um das Eindringen von Schmutz aus der Umgebung in den Tank, und das Austreten von Flüssigkeit aus dem Tank zu verhindern, ist im Bereich der Be- und Entlüftungsöffnung ein Filter befestigt. Der Filter kann von der Be- und Entlüftungsöffnung gelöst werden, beispielsweise um durch die Be- und Entlüftungsöffnung eine Flüssigkeitsstandskontrolle durchführen zu können, oder um den Filter auszuwechseln.

Um den Filter lösbar an dem Tank befestigen zu können, ist bei Tankanordnungen des Standes der Technik an der Be- und Entlüftungsöffnung eine Gewindehülse an den Tank angeschweißt, in welche der Filter eingeschraubt werden kann. Diese Anordnung ist aufwendig in der Herstellung und verursacht wegen des erforderlichen Einschraubens des Filters in die Gewindehülse einen erheblichen Zeitaufwand, beispielsweise bei Wartungsarbeiten.

Der vorliegenden Erfindung liegt die Aufgabe zugrunde, eine wartungsfreundlich gestaltete Tankanordnung zur Verfügung zu stellen, die einen geringen Herstellaufwand erfordert.

Diese Aufgabe wird erfindungsgemäß dadurch gelöst, daß der Filter mittels eines zumindest teilweise aus elastischem Material bestehenden Befestigungsstücks im Bereich der Be- und Entlüftungsöffnung an dem Tank befestigbar ist. Das Befestigungsstück kann unter Ausnutzung seiner Elastizität an dem Tank befestigt werden. Die Elastizität des Befestigungsstücks kann ebenfalls für die Befestigung des Filters an dem Befestigungsstück ausgenutzt werden. Auf Schweißarbeiten im Bereich der Be- und Entlüftungsöffnung kann hierdurch vollständig verzichtet werden.

Gemäß einer vorteilhaften Weiterbildung der Erfindung besteht das Befestigungsstück vollständig aus elastischem Material. Das Befestigungsstück kann dann beispielsweise als einfaches Gummispritzteil hergestellt werden.

Vorteilhaft ist es ebenfalls, wenn das Befestigungsstück rotationssymmetrisch ausgeführt ist. Das Befestigungsstück weist insbesondere eine mittig angeordnete, durchgehende Durchbrechung auf.

Zweckmäßigerweise ist das Befestigungsstück in die Be- und Entlüftungsöffnung einsteckbar. Die Be- und Entlüftungsöffnung ist hierbei ein runder Ausschnitt aus dem Blech, welches die Oberseite des Tanks bildet.

Mit besonderem Vorteil ist das Befestigungsstück mittels Formschluß im Bereich der Be- und Entlüftungsöffnung an dem Tank befestigbar. Das montierte Befestigungsstück weist oberhalb und unterhalb des Blechs einen größeren Durchmesser auf als der Ausschnitt, der die Be- und Entlüftungsöffnung darstellt. Die Montierbarkeit des Befestigungsstücks ist durch die Elastizität des Materials gegeben.

Zweckmäßig ist es ebenfalls, wenn der Filter in das Befestigungsstück einsteckbar ist. Der Filter weist hierfür einen zylindrischen Schaft auf, der in die durchgehende Öffnung des Befestigungsstücks einsteckbar ist.

Mit besonderem Vorteil ist der Filter mittels Reibschluß an dem Befestigungsstück befestigbar. Der Durchmesser der durchgehenden Öffnung des Befestigungsstücks ist bei nicht montiertem Filter geringfügig kleiner als der Durchmesser des Schafts des Filters. Bei der Montage des Filters wird der Durchmesser der Öffnung des Befestigungsstücks elastisch erweitert, wodurch eine ständig in Umfangsrichtung auf den Schaft wirkende Kraft erzeugt wird. Ein unbeabsichtigtes Entfernen des Filters aus dem Befestigungsstück ist infolge der hierdurch entstehenden Reibkraft verhindert.

Zweckmäßigerweise ist das Befestigungsstück als Dichtelement ausgebildet. Das Befestigungsstück dichtet infolge seiner Elastizität die Trennfugen zwischen Tank und Befestigungsstück, sowie zwischen Befestigungsstück und Filter ab.

Weitere Vorteile und Einzelheiten der Erfindung werden anhand des in der schematischen Figur dargestellten Ausführungsbeispiels näher erläutert.

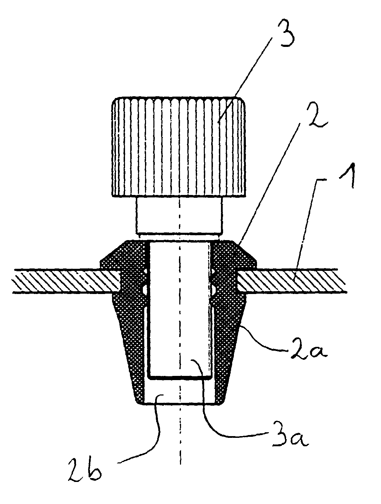

Die Figur zeigt eine erfindungsgemäße Tankanordnung. Ein die Oberseite eines Tanks bildendes Blech 1 weist als Be- und Entlüftungsöffnung einen kreisrunden Ausschnitt auf, in welche ein aus elastischem Material bestehendes Befestigungsstück 2 eingesteckt ist. In das Befestigungsstück 2 ist ein zylindrischer Schaft 3a eines Filters 3 eingesteckt.

Das Befestigungsstück 2 weist an der Außenseite eine Nut auf, die eine formschlüssige Verbindung des Befestigungsstücks 2 mit dem Blech 1 ermöglicht. Bei dem Einstecken des Befestigungsstücks 2 in die Be- und Entlüftungsöffnung wird das elastische Material unterhalb der Nut zusammengedrückt, was durch die konische Formgebung des unteren Abschnitts 2a des Befestigungsstücks 2 erleichtert wird.

Eine mittige Durchbrechung 2b des Befestigungsstücks 2 hat eine im wesentlichen zylindrische Form. Der Filter 3 wird mittels Reibschluß in dem Befestigungsstück 2 gehalten, wobei das Befestigungsstück 2 infolge seiner Elastizität eine in radialer Richtung wirkende Kraft auf den Schaft 3a des Filters 3 ausübt. Die Größe dieser Kraft, und damit die Größe der bei dem Einstecken oder dem Entfernen des Filters zu überwindenden Reibkraft, wird insbesondere durch die Formgebung, die Oberfläche und den Durchmesser der Durchbrechung 2b festgelegt.

Weiterhin dichtet das Befestigungsstück den Schaft 2a des Filters 2 gegenüber dem Blech 1 des Tanks ab.

## Patentansprüche

1. Tankanordnung, insbesondere für eine Hydraulikanlage, mit einem eine Be- und Entlüftungsöffnung aufweisenden Tank, wobei im Bereich der Be- und Entlüftungsöffnung ein Filter lösbar befestigt ist, **dadurch gekennzeichnet**, daß der Filter mittels eines zumindest teilweise aus elastischem Material bestehenden Befestigungsstücks im Bereich der Be- und Entlüftungsöffnung an dem Tank befestigbar ist.

2. Tankanordnung nach Anspruch 1, dadurch gekennzeichnet, daß das Befestigungsstück vollständig aus elastischem Material besteht.

3. Tankanordnung nach Anspruch 1 oder 2, dadurch gekennzeichnet, daß das Befestigungsstück rotationssymmetrisch ausgeführt ist.

4. Tankanodnung nach einem der Ansprüche 1 bis 3, dadurch gekennzeichnet, daß das Befestigungsstück in die Be- und Entlüftungsöffnung einsteckbar ist.

5. Tankanodnung nach einem der Ansprüche 1 bis 4, dadurch gekennzeichnet, daß das Befestigungsstück mittels Formschluß im Bereich der Be- und Entlüftungsöffnung an dem Tank befestigbar ist.

6. Tankanodnung nach einem der Ansprüche 1 bis 5, dadurch gekennzeichnet, daß der Filter in das Befestigungsstück einsteckbar ist.

7. Tankanodnung nach einem der Ansprüche 1 bis 6, dadurch gekennzeichnet, daß der Filter mittels Reibschluß an dem Befestigungsstück befestigbar ist.

8. Tankanodnung nach einem der Ansprüche 1 bis 7, dadurch gekennzeichnet, daß das Befestigungsstück als Dichtelement ausgebildet ist.
